Europäisches Patentamt

European Patent Office

Office européen des brevets

(19)

(11) Veröffentlichungsnummer : **0 111 443**
**B1**

(12) **EUROPÄISCHE PATENTSCHRIFT**

(45) Veröffentlichungstag der Patentschrift :
15.04.87

(21) Anmeldenummer : 83810527.8

(22) Anmeldetag : 16.11.83

(51) Int. Cl.⁴ : **H 02 K 29/08**, F 04 D 25/06

(54) Ventilator mit elektronisch kommutiertem Gleichstrommotor.

(30) Priorität : 10.12.82 CH 7219/82

(43) Veröffentlichungstag der Anmeldung :
20.06.84 Patentblatt 84/25

(45) Bekanntmachung des Hinweises auf die Patenterteilung : 15.04.87 Patentblatt 87/16

(84) Benannte Vertragsstaaten :
AT CH DE FR GB IT LI NL SE

(56) Entgegenhaltungen :
DE-A- 2 718 428
US-A- 3 840 761

(73) Patentinhaber : Micronel AG
Buckstrasse 2
CH-8307 Tagelswangen (CH)

(72) Erfinder : Meier, Peter
Im Chrummenacher 62
CH-8307 Lindau (CH)

(74) Vertreter : Haffter, Tobias Fred, Dr. Dipl.-Phys. et al
PATENTANWALTS-BUREAU ISLER AG Postfach 6940
Walchestrasse 23
CH-8023 Zürich (CH)

Jouve, 18, rue St-Denis, 75001 Paris, France

## Beschreibung

Die vorliegende Erfindung bezieht sich auf einen Ventilator mit einem kollektorlosen, elektronisch kommutierten Gleichstrommotor gemäss dem Oberbegriff des Patentanspruchs 1.

Ein derartiger Ventilator ist aus der japanischen Patentanmeldung 56-63350 (Publikation Nr. 57-180364) bekannt. In einer Ausführungsform dieses bekannten Ventilators sind die Permanentmagnete als aneinandergrenzende Kreissektoren abwechselnder Polarität ausgebildet, die zusammen eine Scheibe bilden. Zwei ebenfalls nebeneinander liegende Spulen des Stators sind derart ausgebildet, dass der Winkel zwischen den zur Erzeugung eines Drehmoments beitragenden Leiterteilen der Spulen ungefähr gleich der Polbreite der Permanentmagnete ist, d. h. die Form und die Grösse jeder Spule etwa gleich denjenigen der sektorförmigen Magnete sind. Als magnetischer Rückschluss für das Magnetfeld ist eine ferromagnetische Scheibe angeordnet. Nachteilig bei diesem bekannten Ventilator ist der Umstand, dass keine definierte Ruhelage des Rotors bezüglich des Stators vorliegt und deshalb das Anlaufen des Ventilators und der gewünschte, festgelegte Drehsinn nur über eine komplizierte und aufwendige elektronische Steuerschaltung erzielbar ist. Zudem ist auch die Herstellung der sektorförmigen Permanentmagnete und Spulen verhältnismässig aufwendig.

Es sind zwar kollektorlose, elektronisch kommutierte Gleichstrommotoren der eingangs genannten Art bekannt (vgl. beispielsweise die US-PS 3 840 761), bei welchen der Stator mit zwei einander diametral gegenüberliegenden Spulen angenähert quadratischer Form und mit ferromagnetischen Elementen versehen ist, welche eine bestimmte Ruhelage des Rotors bezüglich des Stators erzwingen und damit ein Anlaufen des Motors aus dem Stillstand in einem bestimmten Drehsinn erzwingen. Solche ferromagnetische Elemente, z. B. Weicheisenstifte in nicht gleichmässiger Anordnung oder besondere Formstücke aus Weichferrit, erschweren jedoch eine rationale Herstellung der bekannten Motoren. Zudem ist bei diesen der Rotor auf zwei beidseitig der Spulen angeordnete Scheiben mit Permanentmagneten aufgeteilt, was die Bauhöhe des Motors in nachteiliger Weise erhöht.

Aufgabe der Erfindung ist, einen Ventilator der eingangs genannten Art zu schaffen, welcher ohne besondere, aufwendige Massnahmen bezüglich der Permanentmagnete, der Spulen, des magnetischen Rückflusses für das Magnetfeld der Spulen und der elektronischen Steuerung durch das Hallelement in jedem Fall mit gleichbleibender Drehrichtung ohne Last anläuft und eine sehr flache Bauform mit wenigen Bauteilen ermöglicht.

Erfindungsgemäss weist der Ventilator die im kennzeichnenden Teil des Patentanspruchs 1 angeführten Merkmale auf.

Durch die einfache Anordnung diskreter, distanzierter Permanentmagnete und die lagemässig bestimmte Zuordnung eines einfachen Flussleitbleches zu den beiden diametral angeordneten Spulen wird ohne zusätzliche Vorkehrungen eine bestimmte, unveränderliche Ruhelage der Permanentmagnete des Rotors bezüglich der Spulen und des Hallelements des Stators erzielt, so dass der Ventilator auch mit einer nur Grundelemente enthaltenden Steuerschaltung aus dem Stillstand sicher und in der gleichen Drehrichtung anläuft. Da zudem keine zusätzlichen Flussleitmittel erforderlich sind und auch an die Ausbildung der Permanentmagnete und der Spulen keine besonderen Anforderungen abgesehen von ihrer znzahl- und lagemässigen Anordnung gestellt sind, kann der erfindungsgemässe Ventilator, wie nachstehend im einzelnen erläutert, mit wenigen Bauteilen in geringer Bauhöhe als Massenprodukt rationell hergestellt werden.

Ein Ausführungsbeispiels des erfindungsgemässen Ventilators wird nachstehend anhand der Zeichnungen erläutert.

Es zeigen :

Figur 1 in ihrer rechten Hälfte einen Schnitt durch den Ventilator längs den einen Stirnseiten der Permanentmagnete des Rotors und in ihrer linken Hälfte eine Ansicht auf die eine Aussenseite des Gehäuses des Ventilators, gemäss der Linie I-I in Fig. 3,

Figur 2 einen Schnitt durch die Spulen des Ventilators gemäss der Linie II-II in Fig. 3,

Figur 3 einen Schnitt durch den Ventilator gemäss der Linie III-III in Fig. 1,

Figur 4 einen Schnitt durch den Ventilator gemäss der Linie IV-IV in Fig. 1,

Figur 5 ein Schaltschema für eine im Ventilator der Fig. 1 bis Fig. 4 integrierte elektronische Steuerschaltung,

Figur 6 bis Figur 8 schematische Darstellungen des Ventilators für verschiedene Lagen des Rotors bezüglich des Stators, und

Figur 9 eine graphische Darstellung des Verlaufs des durch die Spulen des Ventilators der Fig. 1 bis 4 fliessenden Stromes in Abhängigkeit vom Drehwinkel des Rotors bezüglich des Stators.

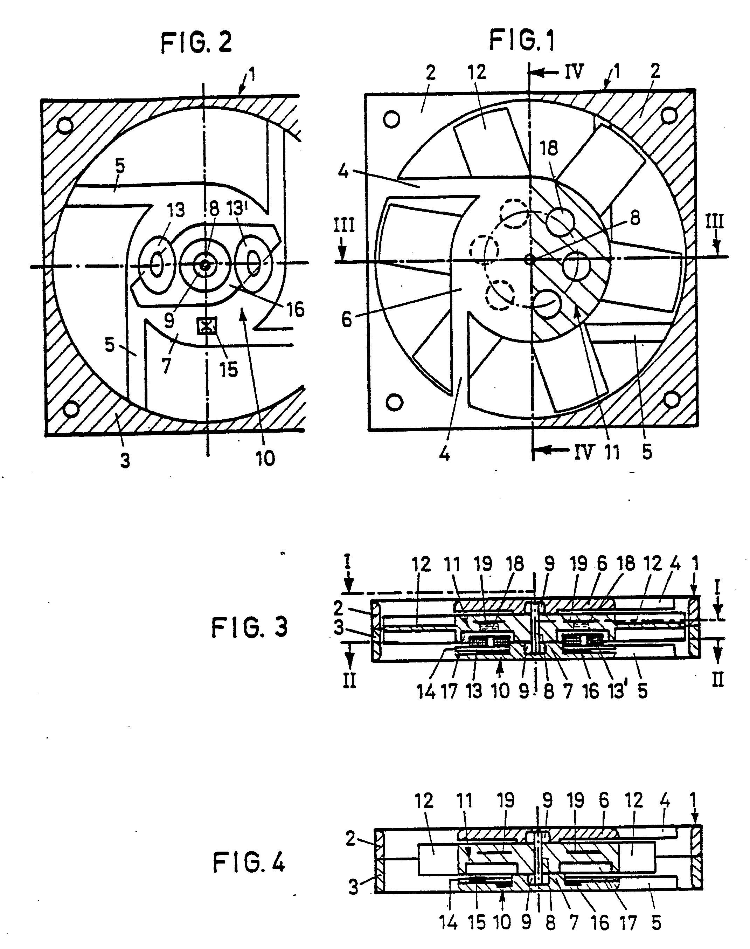

Der in Fig. 1 bis 4 dargestellte Ventilator weist ein Gehäuse 1 auf, das aus zwei durchbrochenen, rahmenförmigen Gehäuseschalen 2 und 3 besteht. Jede Gehäuseschale 2, 3 hat einen durch vier tangential angelenkte Haltearme 4 bzw. 5 befestigten Mittenteil 6 bzw. 7, wobei die Gehäuseschalen 2, 3 sowie die Haltearme 4, 5 und die Mittenteile 6, 7 jeweils einstückig, beispielsweise aus einem Kunststoffmaterial geformt sind. Beide Mittenteile 6, 7 dienen als Lagerschalen für eine Welle 8 und weisen zu diesem Zweck ein eingesetztes Kalottenlager 9 auf. Das eine Mittenteil 7 bildet zudem den nachfolgend noch näher erläuterten Stator 10 des Ventilatormotors.

Auf der in den Kalottenlagern 9 drehbar gelagerten Welle 8 ist ein Rotor 11 des Ventilatormotors fest angeordnet. Der Rotor 11 ist scheibenförmig und im vorliegenden Ausführungsbeispiel mit sechs Ventilatorflügeln 12 versehen. Der Rotor 11 samt seiner Flügel 12 ist ebenfalls einstückig, beispielsweise aus einem Kunststoffmaterial gefertigt.

Das nach Einlegen des Rotors 11 und Verbinden der beiden Gehäuseschalen 2, 3, beispielsweise durch Verkleben oder Verschweissen erhaltene Gehäuse 1 umschliesst demnach die Flügel 12, wobei zufolge der tangentialen Anlenkung der Haltearme 4, 5 die angesaugte bzw. ausgestossene Luft von den Kanten der Flügel stetig geschnitten wird, so dass nur ein schwacher Luftschall entsteht, d. h. der Ventilator im Betrieb wenig Geräusch erzeugt.

Da die Kalottenlager 9 für die Welle 8 des Rotors 11 vor und hinter den Flügeln 12 angeordnet sind, ergibt sich eine beidseitige stabile Lagerung des Rotors. Zudem dringt kein Wellenende bis zu den Aussenseiten der Mittenteile 6, 7 vor, so dass der Ventilator im Achsbereich geschlossen ist. Die Kalottenlager 9 weisen zudem einen reichlichen Vorratsraum für ein Dauerschmiermittel auf.

Anstelle der Kalottenlager 9 kann auch irgend ein anderes Radial- und Axiallager vorgesehen werden. Insbesondere kann die Welle 8 des Rotors 11 an jedem Wellenende in einem im entsprechenden Mittenteil 6 bzw. 7 untergebrachten Kugellager gelagert sein, wobei der Boden der das Kugellager aufnehmenden Ausnehmung des Mittenteils mit einer axialen Auflagefläche für die fein bearbeitete Stirnfläche der Rotorwelle versehen ist, beispielsweise mit einem Saphirplättchen.

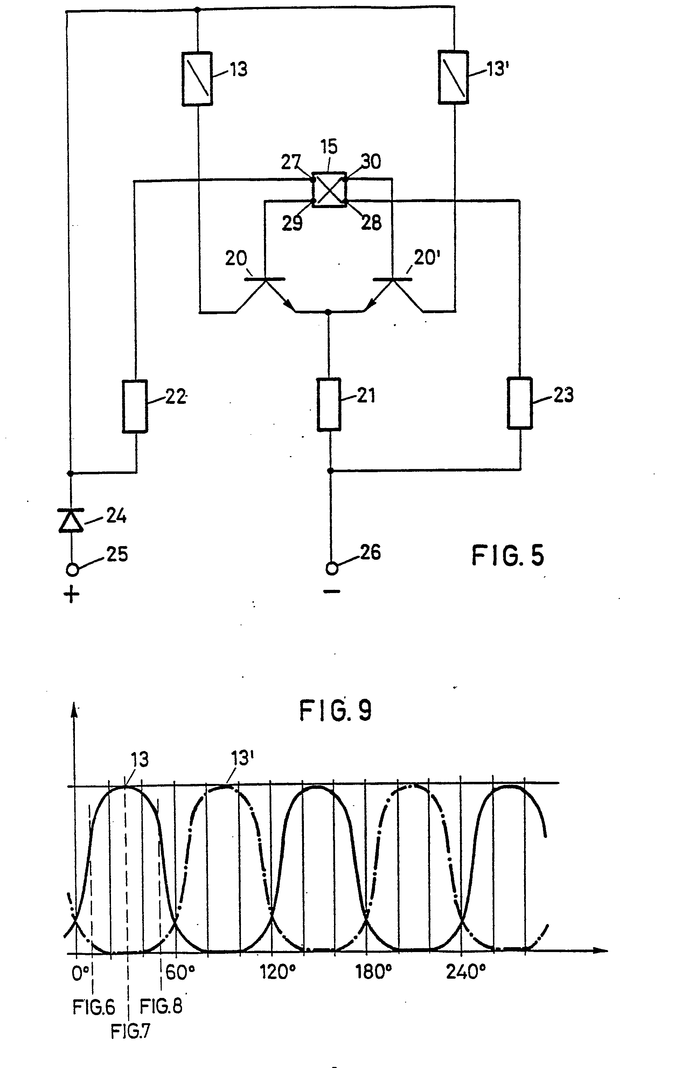

Der den Stator 10 bildende Mittenteil 7 der Gehäuseschale 3 weist zwei diametral angeordnete Spulen 13 und 13' auf, welche auf einer ringförmigen Leiterplatte 14 angeordnet sind, die in einer radial äusseren Ausnehmung des Mittenteils 7 liegt. Auf der Leiterplatte 14 ist zudem in um 90° gegenüber den Spulen 13, 13' versetzter Lage ein plättchenförmiges Hallelement 15 angeordnet. Unterhalb der Leiterplatte 14, d. h. auf der vom Rotor 11 abgewandten Seite der Leiterplatte 14, ist ein Flussleitblech 16 angeordnet, das sich diametral über beide Spulen 13, 13' erstreckt (Fig. 2). Jedoch ist die Mittenlinie des Flussleitblechs 16 gegenüber der diametralen Mittenlinie der Spulen 13, 13' in Umfangsrichtung um einen kleinen Winkelbetrag versetzt. Die Leiterplatte 14 enthält eine anhand der Fig. 5 nachfolgend noch erläuterte elektronische Steuerschaltung, an welcher die Spulen 13, 13' und das Hallelement 15 angeschlossen sind.

Die Spulen 13, 13' sind vorzugsweise körperlose Flachspulen. Besonders vorteilhaft ist eine in Umfangsrichtung ovale, etwa elliptische Spulenform (wie dargestellt). Hierbei hat es sich als vorteilhaft erwiesen, nicht eine geometrische Ellipsenform vorzusehen, sondern das Oval der Spulenform auf der radial ässeren Längsseite in radialer Richtung gegenüber der radial inneren Längsseite der Spule auszuweiten oder auszubauchen.

Es ist auch möglich, statt einer ringförmigen Leiterplatte eine ringförmige Dickfilmschaltung vorzusehen und anzuordnen, in welcher die nachstehend anhand der Fig. 5 beschriebenen Schaltungsbauteile integriert sind.

Der scheibenförmige, mit den Flügeln 12 versehene Rotor 11 weist eine ringförmige Nut 17 auf, in welche die Spulen 13, 13' hineinragen. In der Nut 17 sind sechs in Umfangsrichtung gleichmässig verteilte, zylinderförmige Permanentmagnete 18 versenkt derart angeordnet, dass ihre Stirnflächen mit der Bodenfläche der Nut 17 etwa bündig sind. Die Permanentmagnete weisen abwechselnd Nordpole N und Südpole S auf, so dass je zwei diametral liegende Magnete 18 mit entgegengesetzten Polen N und S ein Permanentmagnetpaar bilden. Beim vorliegenden Ausführungsbeispiel sind somit drei Magnetpaare vorhanden, d. h. eine ungerade Anzahl von Paaren. In an sich bekannter Weise sind die anderen Stirnflächen der Magnete 18 durch einen ringförmigen Eisenrückschluss 19 magnetisch miteinander verbunden.

Ein Schaltschema der gesamten, auf der Leiterplatte 14 enthaltenen elektronischen Steuerschaltung ist in Fig. 5 dargestellt. Diese Steuerschaltung enthält die bereits erwähnten Spulen 13 und 13' sowie das plättchenförmige Hallelement 15. Ferner enthält die Steuerschaltung zwei Transistoren 20 und 20' (hier npn-Transistoren), drei Widerstände 21, 22 und 23, eine Diode 24 sowie Anschlussklemmen 25 und 26 für den positiven bzw. negativen Pol einer nicht dargestellten Gleichstromquelle. Statt npn-Transistoren können selbstverständlich unter Berücksichtigung entsprechender Polaritäten der Gleichstromquelle auch pnp-Transistoren verwendet werden.

Die Spulen 13 und 13' sind in die Kollektorkreise der Transistoren 20 bzw. 20' geschaltet und über die Diode 24, die als Verpolungsschutz vorgesehen ist, mit der positiven Anschlussklemme 25 verbunden. Die Emitter der Transistoren 20, 20' sind über den gemeinsamen Strombegrenzungswiderstand 21 mit der negativen Anschlussklemme 26 verbunden. Das Hallelement 15 weist in bekannter Weise zwei Speiseanschlüsse 27 und 28 auf, die über je einen der Widerstände 22 und 23 mit der positiven Anschlussklemme 25 bzw. mit der negativen Anschlussklemme 26 verbunden sind. Zwei Ausgangsanschlüsse 29 und 30 des Hallelements 15 sind jeweils mit der Basis eines der Transistoren 20, 20' verbunden.

Wird das Hallelement 15 von einem in einer bestimmten Richtung verlaufenden Magnetfluss durchquert, so erscheint an den Ausgangsanschlüssen in bekannter Weise eine Spannung, deren Grösse von der Stärke des Magnetflusses und deren Polarität von der Richtung des Magnetflusses abhängt. Bei Umkehrung der Richtung des Magnetflusses ändert demnach auch die Polarität der erzeugten Spannung. Somit wird in der Steuerschaltung der Fig. 5 je nach Richtung des Magnetflusses der eine oder der andere der Transistoren 20, 20' in Abhängigkeit von der momentanen Stärke des Magnetflusses sterig in den leitenden Zustand gesteuert, während jeweils der andere Transistor entsprechend gesperrt wird. In gleicher Weise verläuft dann der Stromfluss in den Spulen 13 und 13'.

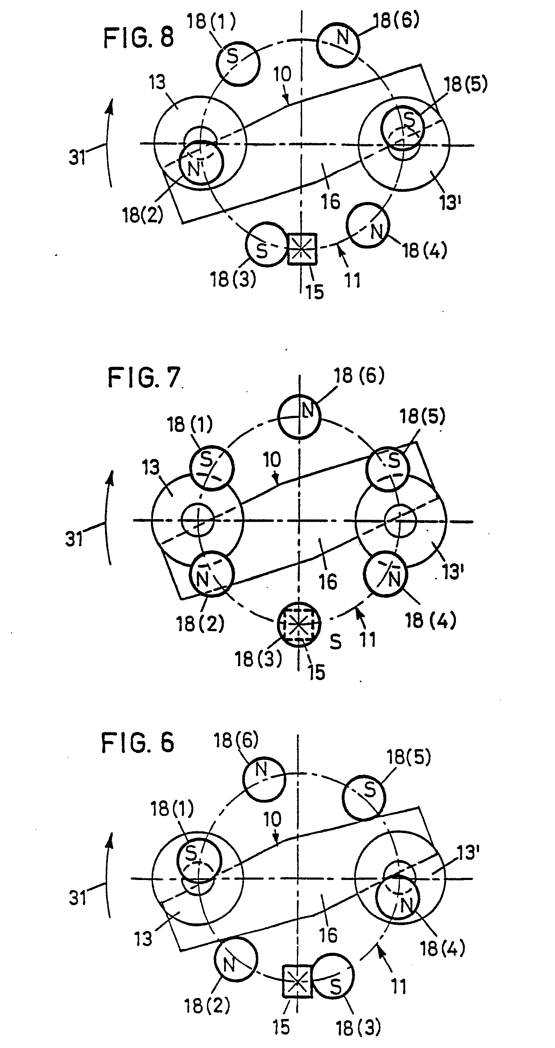

In den Fig. 6 bis Fig. 8 sind schematisch verschiedene Lagen des beschriebenen Rotors 11 bezüglich des Stators 10 vor und während dem Lauf des vorliegenden Ventilators dargestellt, und zwar in der Draufsichtrichtung der Fig. 1 und 2. Hierbei sind vom Stator 10 nur die Spulen 13 und 13', das Hallelement 15 und das Flussleitblech 16, sowie vom Rotor 11 nur die Permanentmagnete 18 samt dem Kreis, auf welchem sie angeordnet sind, dargestellt. Die auf diesem Kreis aufeinanderfolgenden Permanentmagnete sind mit 18(1), 18(2), 18(3), 18(4), 18(5) und 18(6) bezeichnet. Ferner sind die den Spulen 13, 13' und dem Hallelement 15 zugewandten Pole der Permanentmagnete wiederum mit S (Südpol) und N (Nordpol) bezeichnet.

Für das dargestellte Ausführungsbeispiel wird angenommen, dass ein dem Hallelement gegenüberliegender Südpol S des betreffenden Permanentmagneten 18(1), 18(3) oder 18(5) den Transistor 20 im Schaltschema der Fig. 5 in den leitenden Zustand steuert, so dass dann ein Strom durch die zugeordnete Spule 13 fliesst. Umgekehrt bewirkt ein Nordpol N eines Permanentmagneten 18(2), 18(4) oder 18(6), der sich über dem Hallelement 15 befindet, eine entsprechende Aussteuerung des Transistors 21 und damit einen Stromfluss in der zugeordneten Spule 13'. Ferner wird angenommen, dass bei Stromfluss in einer der Spulen 13, 13' ein Magnetfeld mit dem Südpol auf der den Permanentmagneten zugewandten Seite der Spulen erzeugt. In Fig. 9 sind zudem die Ströme der Spulen 13 und 13' in Abhängigkeit vom Drehwinkel des Rotors 11 bezüglich der diametralen Mittenlinie der Spulen dargestellt.

Im Stillstand, d. h. bevor eine Gleichspannung an die Anschlussklemmen 25 und 26 gelegt wird, nimmt der Rotor 11 unter dem Zwang des Flussleitblechs 16 die in Fig. 6 dargestellte Lage oder allenfalls eine dazu um Winkelbeträge von 60° gedrehte Lage ein. Der Magnet 18(1) mit Südpol S liegt somit exzentrisch zur Spule 13. Der Magnet 18(3) mit Südpol S liegt dem Hallelement 15 näher als der Magnet 18(2) mit Nordpol N.

Wird nun die Speise-Gleichspannung an die Anschlussklemmen 25 und 26 der Fig. 5 gelegt, so fliesst Strom durch die Spule 13, da das Hallelement 15 von einem Teil des Magnetflusses des Magneten 18(3) durchquert wird. Ein beträchtlich geringerer Strom fliesst durch die Spule 13', wie dies für den etwa 10° betragenden Stillstand-Drehwinkel des Rotors 11 bezüglich der Spulen 13, 13' des Stators 10 aus Fig. 9 ersichtlich ist. Da sich am Orte der Spule 13 demnach zwei gleichnamige Pole, nämlich Südpole, in etwas versetzter Lage gegenüberstehen, wird der Magnet 18(1) des Rotors 11 vom Magnetfeld der Spule 13 abgestossen, so dass der Rotor 11 in Richtung des Pfeils 31 zu drehen beginnt.

Im Drehwinkelbereich um 30° ist der Strom in der Spule 13 maximal (Fig. 9), da der Transistor 20 zufolge der überdeckenden Lage des Magnets 18(3) und des Hallelements 15 voll ausgesteuert ist. Gleichzeitig wird der auf den Magneten 18(1) folgende Magnet 18(2) mit Nordpol N von der Spule 13 in der Drehrichtung des Pfeils 31 angezogen. Diese Rotorlage ist in Fig. 7 dargestellt.

Bei weiterer Drehung des Rotors 11 gelangt der Magnet 18(2) in den Deckungsbereich der Spule 13, wobei jedoch der Strom der Spule 13 immer noch grösser ist als derjenige der Spule 13', da der Magnet 18(3) näher beim Hallelement 15 liegt als der nachfolgende Magnet 18(4), vgl. Fig. 8 und 9 für einen Drehwinkel von etwa 50°. Bei kongruenter Lage der Magnete 18(2) und 18(5) mit den gegenüberliegenden Spulen 13 bzw. 13' (Drehwinkel 60°) fliesst durch die beiden Spulen ein gleich grosser, minimaler Strom, vgl. Fig. 9.

Wenn sich nun die Drehbewegung des Rotors 11 zufolge seiner kinetischen Energie fortsetzt, steigt der Strom in der Spule 13' wegen der Annäherung des Magneten 18(4) mit Nordpol N an das Hallelement 15 an. Dabei hat der Magnet 18(5) mit Südpol S jedoch das Zentrum der Spule 13' überquert, so dass das voraussetzungsgemäss einen Südpol aufweisende Magnetfeld der Spule 13' den Magneten 18(5) in der Drehrichtung des Pfeils 31 abstösst. Der Antrieb des Rotors 11 erfolgt somit für die nächsten 60° durch die Spule 13' in der gleichen Weise wie dies für die ersten 60° durch die Spule 13 der Fall war. Nach einem Trennen der Steuerschaltung der Fig. 5 von der speisenden Gleichstromquelle läuft der Rotor 11 bis zum Stillstand aus. Wegen der magnetischen Bremsung durch das Flussleitblech 16 bleibt der Rotor 11 aber immer in derselben, in Fig. 6 dargestellten Lage bzw. in einer dazu um Winkelbeträge von 60° gedrehten Lage stehen. Im Fall einer gegenüber Fig. 6 um 60° oder 180° gedrehten Lage wird beim Anlauf automatisch zuerst die Spule 13' erregt, da dann der Magnet 18(2), 18(4) oder 18(6) mit Nordpol N dem Hallelement 15 am nächsten liegt.

Zufolge der stetigen Steuerung der Transistoren 20 und 20' durch das Hallelement 15 ist der Stromverlauf in den Spulen 13 bzw. 13' quasi sinusförmig, wie dies aus Fig. 9 ersichtlich ist. Daraus resultiert ein besonders ruhiger und leiser Lauf des Ventilators.

Die Drehzahl des Ventilators kann leicht durch eine Veränderung der Spannung der Speise-Gleichstromquelle eingestellt werden.

Dadurch, dass vom Flussleitblech 16 auf die Magnete 18 des Rotors 11 eine Anziehungskraft ausgeübt wird, liegt die Welle 8 des Rotors 11 immer am gleichen, im Stator 10 befindlichen Kalottenlager 9 an, was ebenfalls einen ruhigen und leisen Lauf des Ventilators bewirkt und dessen Lebensdauer erhöht.

Statt dreier Paare von Permanentmagneten 18 kann natürlich auch eine grössere ungerade Anzahl von solchen Magnetpaaren vorgesehen werden. Ferner kann das Flussleitblech 16 in einer Winkellage bezüglich der Spulen, 13, 13' angeordnet werden, die nicht nur um einen Bruchteil des Winkelabstandes benachbarter Permanentmagnete 18 versetzt ist, sondern um diesen Bruchteil zusätzlich eines oder mehrerer Winkelabstände aufeinanderfolgender Permanentmagnete.

Der vorliegende Ventilator weist nur eine Drehrichtung auf. Da das Gehäuse jedoch sehr flach ist, die Ventilatorflügel 12 in der Tiefenrichtung des Gehäuses 1 in der Mitte liegen und die Lufteintritts- und Luftaustrittsseiten identisch ausgebildet sind, wobei keine Wellenenden erscheinen, kann der Ventilator je nach der gewünschten Luftförderungsrichtung in der einen oder anderen Lage eingebaut werden. Insbesondere eignet sich der vorliegende Ventilator zufolge seiner flachen Bauform und seiner problemlosen Umkehrbarkeit zum Einbau zwischen den Führungsschienen für Leiterplatten in Kartenmagazinen zwecks Zwangsbelüftung der Leiterplatten. Die wenigen und einfachen Bauteile des vorliegenden Ventilators ermöglichen eine kostengünstige, rationelle Herstellung in grossen Stückzahlen.

**Patentansprüche**

1. Ventilator mit einem kollektorlosen, elektronisch kommutierten Gleichstrommotor, der einen Stator (10) und einen Flügel (12) aufweisenden Rotor (11) hat, von welchen der Rotor (11) mit einer ungeraden Anzahl von diametralen, je zwei Permanentmagnete (18) mit ungleichnamigen Polen aufweisenden Magnetpaaren versehen ist, wobei in Umfangsrichtung die Pole (N, S) aufeinanderfolgender Permanentmagnete (18) ungleichnamig sind, und von welchen der Stator (10) mit zwei durch eine elektronische Steuerschaltung (Fig. 5) erregten Spulen (13, 13') und mit einem Hallelement (15) versehen ist, welches das Magnetfeld der an ihm vorbeilaufenden Permanentmagnete (18) des Rotors (11) abtastet und dabei eine Steuerspannung für die Steuerschaltung erzeugt, wobei der Stator (10) einen den Spulen (13, 13') zugeordneten magnetischen Rückschluss (16) hat, dadurch gekennzeichnet, dass die einzelnen Permanentmagnete (18) des Rotors (11) in Umfangsrichtung voneinander gleichmässig distanziert angeordnet sind, dass auf dem Stator (10) die beiden Spulen (13, 13') in diametraler Lage und das einzige Hallelement (15) im Umfangsrichtung zwischen den Spulen (13, 13') angeordnet sind, und dass als ein magnetischer, die Ruhelage des Rotors (11) bestimmender Rückschluss zweier in Umfangsrichtung aufeinanderfolgender Permanentmagnete (18) des Rotors (11) sowie als magnetischer Rückschluss des Stators (10) ein sich diametral erstreckendes Flussleitblech (16) angeordnet ist, dessen Winkellage gegenüber derjenigen der Spulen (13, 13') um einen Bruchteil des Winkelabstandes aufeinanderfolgender Permanentmagnete (18) oder um diesen Bruchteil zusätzlich eines oder mehrerer Winkelabstände aufeinanderfolgender Permanentmagnete (18) versetzt ist.

2. Ventilator nach Anspruch 1, dadurch gekennzeichnet, dass er ein Gehäuse (11) mit zwei Gehäuseschalen (2, 3) aufweist, von welchen jede einen rahmenförmigen Aussenteil und einen an diesem befestigten Mittenteil (6, 7) hat, welcher ein Lager (9) zur Aufnahme einer zwischen den beiden Gehäuseschalen (2, 3) angeordneten, einen Rotorkörper tragenden Rotorwelle (8) enthält, wobei der Mittenteil (7) der einen Gehäuseschale (3) zudem als Träger für einen Statorkörper dient.

3. Ventilator nach Anspruch 2, dadurch gekennzeichnet, dass das Lager (9) mindestens eines der Mittenteile (6, 7) als Radial- und Axiallager für die Rotorwelle (8) derart ausgebildet ist, dass das betreffende Wellenende durch den Mittenteil (6, 7) nach aussen abgedeckt ist.

4. Ventilator nach Anspruch 2, dadurch gekennzeichnet, dass der Mittenteil jeder Gehäuseschale über tangential angelenkte Arme mit dem Rahmenteil der Gehäuseschale verbunden ist.

5. Ventilator nach Anspruch 2, dadurch gekennzeichnet, dass der Rotor einen zwischen den beiden Gehäuseschalen (2, 3) auf der Rotorwelle befestigten scheibenförmigen Rotorkörper (11) mit an dessen Umfangsseite angeordneten Ventilatorflügeln (12) hat.

6. Ventilator nach einem der Ansprüche 2 bis 5, dadurch gekennzeichnet, dass jede Gehäuseschale (2, 3) einstückig aus einem Kunststoffmaterial geformt ist.

7. Ventilator nach einem der Ansprüche 2 bis 6, dadurch gekennzeichnet, dass der Rotorkörper mit den Flügeln (12) einstückig aus einem Kunststoffmaterial geformt ist.

8. Ventilator nach einem der Ansprüche 1 bis 7, dadurch gekennzeichnet, dass die Spulen (13, 13') körperlose, in der Umfangsrichtung des Stators (10) langgestreckte, ovale Flachspulen sind.

9. Ventilator nach Anspruch 8, dadurch gekennzeichnet, dass die ovalen Flachspulen auf ihrer radial äusseren Längsseite in radialer Richtung ausgebaucht sind.

10. Ventilator nach einem der Ansprüche 1 bis 9, dadurch gekennzeichnet, dass das Hallelement (15) in Umfangsrichtung des Stators (10) genau in der Mitte zwischen den beiden Spulen (13, 13') angeordnet ist.

11. Ventilator nach einem der Ansprüche 2 bis 10, dadurch gekennzeichnet, dass der Rotorkörper eine ringförmige Nut (17) aufweist, in welche die Spulen (13, 13') des Stators (10) hineinragen und in deren Boden die Permanentmagnete (8) angeordnet sind, wobei den Permanentmagneten (8) ein im Rotorkörper angeordneter, ringförmiger Einsenrückschluss (19) zugeordnet ist.

**Claims**

1. A fan having a collector-less, electronically commutated direct-current motor which has a stator (10) and a rotor (11) having blades (12), of which the rotor (11) is provided with an uneven number of diametral magnet pairs each provided with two permanent magnets (18) having opposite poles, whereby, in the peripheral direction, the poles (N, S) of consecutive permanent magnets (18) are opposite, and of which the stator (10) is provided with two coils (13, 13') excited by an electronic control circuit (Fig. 5) and with a Hall-effect device (15) which scans the magnetic field of the permanent magnets (18) of the rotor (11) as they pass by and generates a control voltage for the control circuit, the stator (10) having a magnetic yoke (16) assigned to one of the coils (13, 13'), characterised in that the individual permanent magnets (18) of the rotor (11) are disposed at uniform intervals from one another in the peripheral direction, the two coils (13, 13') are disposed on the stator (10) in a diametral position and the single Hall-effect device (15) is disposed in the peripheral direction between the coils (13, 13'), and in that permanent magnets (18) of the rotor (11) are provided in succession in the peripheral direction as a magnetic yoke determining the resting position of the rotor (11), and a diametrically extending flux conducting sheet (16) is provided as a magnetic yoke for the stator (10), the angular position of which flux conducting is offset relative to that of the coils (13, 13') by a fraction of the angular distance of the consecutive permanent magnets (18) or by said fraction plus one or more angular distances of the consecutive permanent magnets (18).

2. A fan as claimed in claim 1, characterised in that it has a housing (11) with two housing shells (2, 3), each of which has a frame-like outer part and a centre part (6, 7) secured thereto, which centre parts each contain a bearing (9) for mounting a rotor shaft (8) disposed between the two housing shells (2, 3) and carrying a rotor body, the centre part (7) of one housing shell (3) additionally serving as a carrier for a stator body.

3. A fan as claimed in claim 2, characterised in that the bearing (9) of at least one of the centre parts (6, 7) is in the form of a radial and axial bearing for the rotor shaft (8) such that the shaft end concerned is covered with respect to the outside by the centre part (6, 7).

4. A fan as claimed in claim 2, characterised in that the centre part of each housing shell is connected by way of tangentially pivoted arms to the frame part of the housing shell.

5. A fan as claimed in claim 2, characterised in that the rotor has a disc-shaped rotor body (11), with fan blades (12) disposed on its peripheral edge, which body is secured to the rotor shaft between the two housing shells (2, 3).

6. A fan as claimed in any of claims 2 to 5, characterised in that each housing shell (2, 3) is formed in one piece from a plastics material.

7. A fan as claimed in any of claims 2 to 6, characterised in that the rotor body is formed from a plastics material in one piece with the blades (12).

8. A fan as claimed in any of claims 1 to 7, characterised in that the coils (13, 13') are coreless, oval flat coils which extend in the peripheral direction of the stator (10).

9. A fan as claimed in claim 8, characterised in that the oval flat coils have a bulge in the radial direction on their radially outer longitudinal edges.

10. A fan as claimed in any of claims 1 to 9, characterised in that the Hall-effect device (15) is disposed in the peripheral direction of the stator (10) precisely in the middle between the two coils (13, 13').

11. A fan as claimed in any of claims 2 to 10, characterised in that the rotor body han an annular groove (17) into which the coils (13, 13') of the stator (10) project and in whose base the permanent magnets (8) are disposed, an annular iron yoke (19) disposed in the rotor body being associated with the permanent magnets (8).

**Revendications**

1. Ventilateur muni d'un moteur à courant continu dépourvu de collecteur et commuté de façon électronique, qui présente un stator (10) et un rotor (11) muni d'ailettes (12), le rotor (11) étant pourvu d'un nombre impair de paires diamétrales d'aimants comprenant, à chaque fois, deux aimants permanents (18) à pôles de dénomination différente, les pôles (N, S) d'aimants permanents successifs (18) étant de dénomination différente dans le sens périphérique, et le stator (10) étant équipé de deux bobines (13, 13') excitées par l'intermédiaire d'un circuit de commande électronique (Fig. 5), ainsi que d'un élément (15) à effet Hall qui détecte le champ magnétique des aimants permanents (18) du rotor (11) défilant en regard de cet élément, et qui engendre alors une tension de commande pour le circuit de commande, le stator (10) présentant un couplage magnétique en retour (16) associé aux bobines (13, 13'), caractérisé par le fait que les aimants permanents individuels (18) du rotor (11) sont disposés à des distances mutuelles égales dans le sens périphérique ; par le fait que, sur le stator (10), les deux bobines (13, 13') occupent une position diamétrale et l'unique élément (15) à effet Hall est intercalé entre les bobines (13, 13') dans le sens périphérique ; et par le fait que deux aimants permanents (18) du rotor (11) se succédant dans le sens périphérique font office de couplage magnétique en retour déterminant la position de repos du rotor (11), le couplage magnétique du stator (10) étant constitué par une tôle (16) conductrice du flux qui s'étend diamétralement et dont la position angulaire est décalée, par rapport à celles des bobines (13, 13'), d'une fraction de l'espacement angulaire d'aimants permanents successifs (18), ou de cette fraction à laquelle s'ajoutent un ou plusieurs espacements angulaires d'aimants permanents successifs (18).

2. Ventilateur selon la revendication 1, caractérisé par le fait qu'il possède un boîtier (1) comprenant deux coquilles de boîtier (2, 3), dont chacune se compose d'une partie externe en forme de cadre et d'une partie centrale (6, 7) qui est fixée à ladite partie externe et renferme un palier (9) destiné à recevoir un arbre rotorique (8) portant un corps rotorique et intercalé entre les deux coquilles (2, 3) du boîtier, la partie centrale (7) de l'une (3) des coquilles du boîtier servant de surcroît de support pour un corps statorique.

3. Ventilateur selon la revendication 2, caractérisé par le fait que le palier (9) d'au moins l'une des parties centrales (6, 7) est réalisé sous la forme d'un palier radial et axial pour l'arbre rotorique (8), de telle sorte que l'extrémité d'arbre considérée soit recouverte vers l'extérieur par la partie centrale (6, 7).

4. Ventilateur selon la revendication 2, caractérisé par le fait que la partie centrale de chaque coquille du boîtier est reliée, par l'intermédiaire de bras articulés tangentiellement, à la partie formant cadre de cette coquille de boîtier.

5. Ventilateur selon la revendication 2, caractérisé par le fait que le rotor présente un corps rotorique discoïdal (11) fixé sur l'arbre rotorique entre les deux coquilles (2, 3) du boîtier, ainsi que des ailettes (12) de ventilateur disposées à la face périphérique dudit corps.

6. Ventilateur selon l'une quelconque des revendications 2 à 5, caractérisé par le fait que chaque coquille (2, 3) du boîtier est moulée d'un seul tenant en une matière plastique.

7. Ventilateur selon l'une quelconque des revendications 2 à 6, caractérisé par le fait que le corps rotorique est moulé d'une seule pièce, avec les ailettes (12), en une matière plastique.

8. Ventilateur selon l'une quelconque des revendications 1 à 7, caractérisé par le fait que les bobines (13, 13') sont des bobines plates ovales, dépourvues de noyau et s'étendant en longueur dans le sens périphérique du stator (10).

9. Ventilateur selon la revendication 8, caractérisé par le fait que les bobines plates ovales sont bombées dans le sens radial sur leur face longitudinale radialement externe.

10. Ventilateur selon l'une quelconque des revendications 1 à 9, caractérisé par le fait que l'élément (15) à effet de Hall se trouve, dans le sens périphérique du stator (10), exactement au centre entre les deux bobines (13, 13').

11. Ventilateur selon l'une quelconque des revendications 2 à 10, caractérisé par le fait que le corps rotorique présente une gorge annulaire (17) dans laquelle s'engagent les bobines (13, 13') du stator (10) et dans le fond de laquelle les aimants permanents (18) sont disposés, une pièce annulaire de retour en fer (19), logée dans le corps rotorique, étant associée aux aimants permanents (8).

FIG. 2

FIG. 1

FIG. 3

FIG. 4

1

**0 111 443**

FIG. 5

FIG. 9

FIG.6 | FIG.8

FIG.7

2

**FIG. 8**

**FIG. 7**

**FIG. 6**